(19) Europäisches Patentamt
European Patent Office
Office européen des brevets

(11) **EP 4 651 550 A1**

(12) **EUROPEAN PATENT APPLICATION**
published in accordance with Art. 153(4) EPC

(43) Date of publication:
**19.11.2025 Bulletin 2025/47**

(21) Application number: 24757236.5

(22) Date of filing: **13.02.2024**

(51) International Patent Classification (IPC):
*H04W 24/08* (2009.01)    *H04W 64/00* (2009.01)
*H04W 52/02* (2009.01)    *H04W 36/00* (2009.01)
*H04W 76/28* (2018.01)    *H04B 17/318* (2015.01)

(52) Cooperative Patent Classification (CPC):
**H04B 17/318; H04W 24/08; H04W 36/00;
H04W 52/02; H04W 64/00; H04W 76/28**

(86) International application number:
**PCT/KR2024/095104**

(87) International publication number:
**WO 2024/172515 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230020873
20.12.2023 KR 20230187617**

(71) Applicant: **Samsung Electronics Co., Ltd.
Suwon-si, Gyeonggi-do 16677 (KR)**

(72) Inventors:
• **KIM, Sangbum**
 **Suwon-si Gyeonggi-do 16677 (KR)**
• **SUN, Weiping**
 **Suwon-si Gyeonggi-do 16677 (KR)**
• **JUNG, Sangyeob**
 **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR PREDICTING WHETHER TERMINAL IS ON CELL BOUNDARY IN WIRELESS COMMUNICATION SYSTEM**

(57) The present disclosure relates to a 5G or 6G communication system for supporting higher data transmission rates. A terminal in a wireless communication system of the present disclosure comprises a transceiver and a control unit coupled with the transceiver, wherein the control unit may: receive cell DTX pattern information and reception signal configuration values from a base station via system information or dedicated signaling; identify, on the basis of the cell DTX pattern information or an SSB broadcast period, an SSB non-transmission period in which SSBs are not transmitted; determine, on the basis of the most recently received SSB, whether the terminal is located on the cell edge of the base station in the SSB non-transmission period; and control to set a cell measurement period in the SSB non-transmission period on the basis of the determination.

FIG.9

**Description**

[Technical Field]

The disclosure relates to a wireless communication system or a mobile communication system. Specifically, the disclosure relates to a method and a device for estimating whether a UE is at a cell edge in a wireless communication system.

[Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

A terminal or a base station according to an embodiment of the disclosure may reduce power consumption. The terminal according to an embodiment may reduce power consumed in a cell measurement operation by changing and performing the cell measurement operation. The base station according to an embodiment may reduce power consumption by performing Cell DTX/DRX.

[Solution to Problem]

A terminal in a wireless communication system according to an embodiment may include: a transceiver; and a controller coupled with the transceiver, wherein the controller is configured to perform control to: receive cell discontinuous transmission (DTX) pattern information and a reception signal configuration value from a base station through system information or dedicated signaling; identify a synchronization signal (SS)/physical broadcast channel (PBCH) block (SSB) non-transmission interval in which an SSB is not transmitted, based on the cell DTX pattern information or an SSB broadcast period; determine whether the terminal is located at a cell edge of the base station in the SSB non-transmission interval, based on a latest received SSB; and determine a cell measurement period in the SSB non-transmission interval, based on the determination.

A method performed by a terminal in a wireless communication system according to an embodiment may include: receiving cell discontinuous transmission (DTX) pattern information and a reception signal configuration value from a base station through system information or dedicated signaling; identifying a synchronization signal (SS)/physical broadcast channel (PBCH) block (SSB) non-transmission interval in which an SSB is not transmitted, based on the cell DTX pattern information or an SSB broadcast period; determining whether the terminal is located at a cell edge of the base station in the SSB non-transmission interval, based on a latest received SSB; and determining a cell measurement period in the SSB non-transmission interval, based on the determination.

[Advantageous Effects of Invention]

The disclosure relates to a 5G or 6G communication system for supporting a higher data transmission rate in a wireless communication system or a mobile communication system.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a structure of a wireless communication system according to an embodiment of the disclosure.
FIG. 2 illustrates a radio access state transition in a wireless communication system according to an embodiment of the disclosure.
FIG. 3 illustrates Cell DTX/DRX for reducing base station power consumption according to an embodiment of the disclosure.
FIG. 4 illustrates an operation for determining whether a terminal is at a cell edge according to an embodiment of the disclosure.
FIG. 5 illustrates the influence of a Non-active period of Cell DTX when determining whether a terminal is at a cell edge according to an embodiment of the disclosure.
FIG. 6 illustrates a first solution for determining whether a terminal is at a cell edge during a non-active period of Cell DTX according to an embodiment of the disclosure.
FIG. 7 illustrates a second solution for determining whether a terminal is at a cell edge during a non-active period of Cell DTX according to an embodiment of the disclosure.
FIG. 8 illustrates a third solution for determining whether a terminal is at a cell edge during a non-active period of Cell DTX according to an embodiment of the disclosure.
FIG. 9 is a flowchart of a terminal operation for determining whether a terminal is at a cell edge during a non-active period of Cell DTX according to an embodiment of the disclosure.

FIG. 10 is a flowchart of a base station operation for determining whether a terminal is at a cell edge during a non-active period of Cell DTX according to an embodiment of the disclosure.

FIG. 11 illustrates a structure of a UE according to an embodiment of the disclosure.

FIG. 12 illustrates a structure of a base station according to an embodiment of the disclosure.

[Mode for the Invention]

A detailed description of known functions or configurations incorporated herein will be omitted when it is determined that the description may make the subject matter of the disclosure unnecessarily unclear. Hereinafter, embodiments of the disclosure will be described with reference to the accompanying drawings.

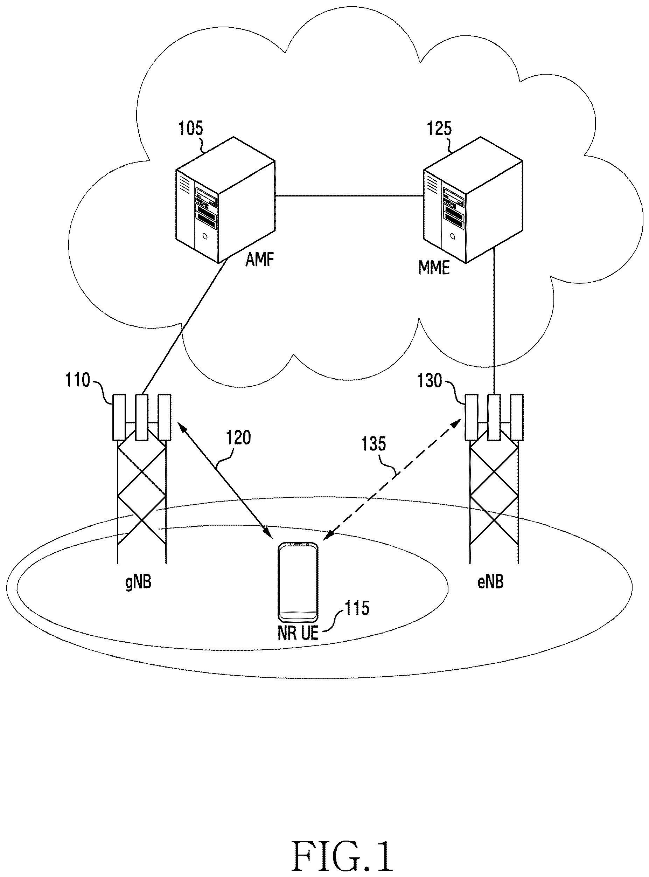

FIG. 1 illustrates a structure of a wireless communication system according to an embodiment of the disclosure.

Referring to FIG. 1, as illustrated therein, a radio access network of a 5G communication system (new radio, NR) may include a 5G base station (new radio node B, hereinafter referred to as "gNB") 110 and an AMF (new radio core network) 105. A user terminal (user equipment, hereinafter referred to as "UE") 115 may access an external network via the gNB 110 and the AMF 105.

In FIG. 1, the gNB 110 corresponds to an evolved node B (eNB) 130 of a conventional LTE system. The gNB 110 is connected to the NR UE 115 via a radio channel, and can provide more excellent service 120 than wireless communication service 135 provided by the eNB 130. In the wireless communication system, since all user traffic is serviced through a shared channel, a device that collects state information, such as buffer statuses, available transmit power states, and channel states of UEs, and performs scheduling accordingly is required. The gNB 110 according to an embodiment may collect the state information, such as buffer statuses, available transmit power states, and channel states of UEs, and perform scheduling accordingly. In general, one gNB 110 may control multiple cells.

The 5G wireless communication system may have a greater bandwidth than the existing maximum bandwidth and implement ultrahigh speed data transmission as compared to LTE. The 5G wireless communication technology may employ an orthogonal frequency division multiplexing (hereinafter referred to as "OFDM") as a radio access technology, and may additionally integrate a beamforming technology therewith. In addition, the 5G wireless communication technology may employ an adaptive modulation & coding (hereinafter referred to as "AMC") scheme for determining a modulation scheme and a channel coding rate according to a channel state of a UE.

The AMF 105 may perform functions such as mobility support, bearer configuration, and QoS configuration. The AMF is a device responsible for various control functions as well as a mobility management function for a UE, and may be connected to multiple base stations 110. In addition, the next-generation mobile communication system may interwork with the existing LTE system, and the AMF may be connected to an MME 125 via a network interface. The MME 125 may be connected to an eNB 130 that is an existing LTE base station. If the UE 115 supports LTE-NR dual connectivity, the UE 115 may transmit/receive data while maintaining connections to both the gNB 110 and the eNB 130.

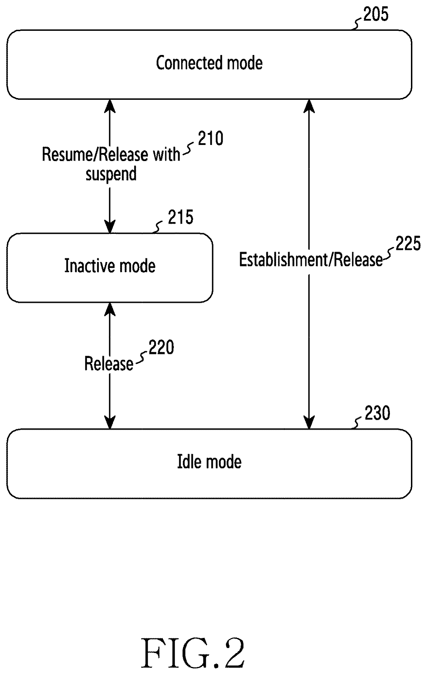

FIG. 2 illustrates a radio access state transition in a wireless communication system according to an embodiment of the disclosure.

A wireless communication system has three types of radio access states (RRC states). A connected mode (RRC_CONNECTED) 205 is a radio access state in which a UE may transmit and receive data. An idle mode (RRC_IDLE) 230 is a radio access state in which the UE monitors whether paging is transmitted to the UE. The connected mode 205 and the idle mode 230 are radio access states which are also applied to the existing LTE system, and the detailed technologies thereof are the same as those of the existing LTE system. In a 5G wireless communication system, a radio access state called an inactive mode (RRC_INACTIVE) 215 is newly defined. In the inactive mode, a UE context is maintained in a base station and the UE, and radio access network (RAN)-based paging is supported. The characteristics of the inactive mode are listed as follows.

- Cell re-selection mobility;
- Core network (CN)-NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

A radio access state of the UE may be transitioned from the inactive mode 215 to the connected mode 205 or the idle mode 230 by using a specific procedure. As in operation 210, the radio access state of the UE may be transitioned from the inactive mode 215 to the connected mode 205 according to a Resume procedure, and may be transitioned from the connected mode 205 to the inactive mode 215 by using a Release procedure including suspend configuration information. In operation 210, at least one RRC message may be transmitted and received between the UE and the base station.

Operation 210 may include at least one procedure.

After the Resume procedure, the radio access state of the UE may be transitioned from the inactive mode 215 to the idle mode 230 through the Release procedure, as in operation 220.

The radio access state of the UE may be transitioned between the connected mode 205 and the idle mode 230. The transition between the connected mode 205 and the idle mode 230 of the radio access state may be performed based on the existing LTE technology. For example, as in operation 225, the radio access state of the UE may be transitioned between the connected mode 205 and the idle mode 230 through an establishment procedure or the Release procedure.

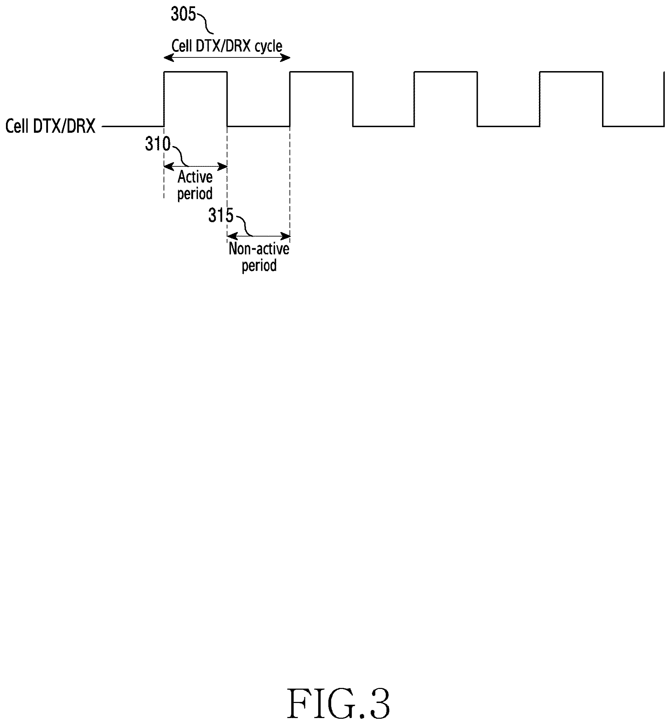

FIG. 3 illustrates Cell DTX/DRX for reducing base station power consumption according to an embodiment of the disclosure.

In a mobile communication system, a base station consumes a considerable amount of power since the base station is required to provide a service to multiple UEs within its service area. Therefore, technologies for reducing power consumption of the base station are being discussed. For example, the following candidate technologies have been proposed in the NR standard.

- Cell DRX/DRX
- Network energy saving (NES)-aware conditional handover (CHO)
- SSB-less/SIB-less cell
- Cell (re)selection enhancement
- UE wake-up signal (WUS)
- UE assistance information for NES

Cell DTX/DRX is a technique for periodically turning on/off data transmission and reception. Cell discontinuous transmission (Cell DTX) is a technique in which a base station turns on/off data transmission in a downlink, and cell discontinuous reception (Cell DRX) is a technique in which a base station turns on/off data reception in an uplink. While the base station turns off data transmission and reception, the power consumption of the base station can be greatly reduced.

A Cell DTX/DRX cycle 305 may include an Active period 310 and a Non-active period 315. When the Cell DTX/DRX is operated, the base station may perform a predetermined operation corresponding to the Active period 310 or the Non-active period 315 for each predetermined Cell DTX/DRX cycle 305. In the Active period 310, the base station may perform normal operations for providing a service to the existing UE. In the Non-active period 315, the base station may turn off data transmission and reception. For example, the following options for base station operations may be considered.

- First option: gNB is expected to turn off all transmission and reception for data traffic and reference signal during Cell DTX/DRX non-active periods
- Second option: gNB is expected to turn off its transmission/reception only for data traffic during Cell DTX/DRX non-active periods (i.e., gNB will still transmit/receive reference signals)
- Third option: gNB is expected to turn off its dynamic data transmission/reception during Cell DTX/DRX non-active periods (i.e., gNB is expected to still perform transmission/reception in periodic resources, including SPS, CG-PUSCH, SR, RACH, and SRS)
- Fourth option: gNB is expected to only transmit reference signals (e.g., CSI-RS for measurement)

In the first option and the fourth option, the base station may not broadcast a synchronization signal and physical broadcast channel block (SSB), which is a common reference signal.

In order to save (reduce) the power consumption of the base station, a period of a reference signal (e.g., SSB) may be variably changed or a very long period may be applied. The base station may provide SSB period information of a serving cell to a UE through system information or dedicated signaling (signalling), and an SSB of the serving cell may have a period of 5, 10, 20, 40, 80, or 160ms. The longer the period, the more the base station may reduce power consumed for SSB transmission, while the UE becomes insensitive to a state change of a wireless channel provided by the serving cell. In order to maximize power savings of the base station, a new SSB period longer than the existing upper value of 160ms may be introduced. The new SSB period may be provided by the base station to UEs supporting an NES mode through system information or dedicated signaling.

In the disclosure, a case is considered in which an SSB is not transmitted in a non-active period of Cell DTX or in which a UE is not able to measure a wireless channel for a predetermined time interval due to a long SSB period. The embodiments are described based on a case in which an SSB is not transmitted in a non-active period of Cell DTX, but the solutions proposed in the disclosure may be applied even in a time interval in which an SSB is not measured due to a long SSB period.

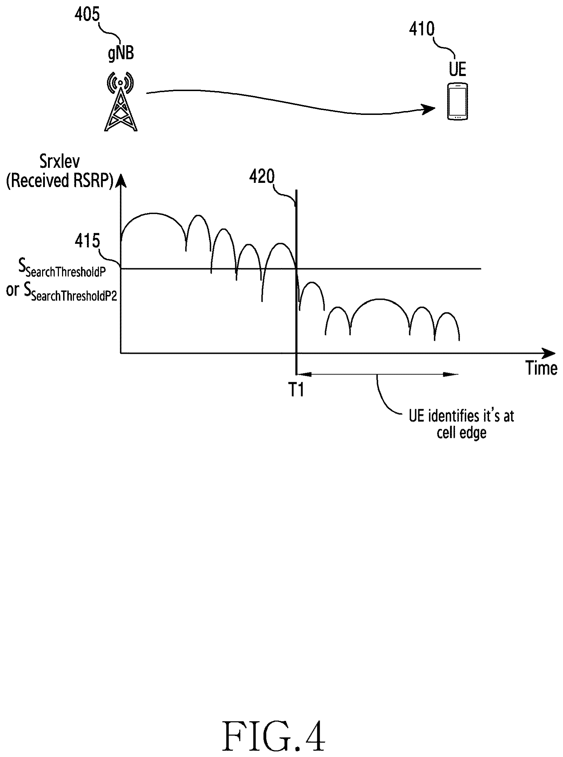

FIG. 4 illustrates an operation for determining whether a UE is at a cell edge according to an embodiment of the disclosure.

When a UE 410 is located in a cell edge area, cell reselection or handover may support the mobility of the UE. The UE 410 may use a predetermined cell measurement result to ensure mobility support. The UE 410 may determine whether to perform cell reselection through intra-/inter-/inter-RAT cell measurement operations in an idle mode or an inactive mode. The UE 410 may collect a preconfigured cell measurement result in a connected mode and report the collected cell measurement result to a base station 405, so that the base station 405 may determine a time point for performing handover.

When the UE 410 is not located in the cell edge area, cell reselection or handover is not required to be performed, and a cell measurement operation for performing cell reselection or handover is not required to be performed. Since the cell measurement operation consumes the power of the UE, when the UE is not located in the cell edge area, the UE may change the cell measurement operation. For example, the UE may temporarily suspend some operations among the intra-/inter-/inter-RAT cell measurement operations. For example, the UE 410 may adjust requirements applied to the cell measurement operations to reduce power consumption. The UE 410 may apply a longer measurement period to perform a cell measurement operation, thereby reducing power consumed in the cell measurement operation. Hereinafter, a procedure in which the UE changes the cell measurement operation to reduce power consumption is referred to as Relaxed measurement.

In order to determine whether the UE is located in the cell edge area, the UE applies the equations in [Table 1] from the TS38.304 standard document. As shown in [Table 1], an equation applied to a general UE and an equation applied to a reduced capability (RedCap) UE are distinguished from each other.

Table 1]

| TS38.304 |
| --- |
| 5.2.4.9.2 Relaxed measurement criterion for UE not at cell edge |

The relaxed measurement criterion for UE not at cell edge is fulfilled when:

- Srxlev > $S_{SearchThresholdP}$, and,
- Squal > SsearchThresholdQ, if $S_{SearchThresholdQ}$ is configured,

Where:

- Srxlev = current Srxlev value of the serving cell (dB).
- Squal = current Squal value of the serving cell (dB).

...

(omitted)

...

...

(omitted)

...

5.2.4.9.4 Relaxed measurement criterion for a stationary RedCap UE not at cell edge

The relaxed measurement criterion for a stationary RedCap UE not at cell edge is fulfilled when:

- the relaxed measurement criterion in clause 5.2.4.9.3 is fulfilled for a period of TSearchDeltaP-Stationary,
- Srxlev > $S_{SearchThresholdP2}$, and,
- Squal > $S_{SearchThresholdQ2}$, if $S_{SearchThresholdQ2}$ is configured.

Where:

- Srxlev = current Srxlev value of the serving cell (dB).
- Squal = current Squal value of the serving cell (dB).

The base station 405 may provide configuration values such as $S_{SearchThresholdP}$, $S_{SearchThresholdQ}$, $S_{SearchThresholdP2}$, or $S_{SearchThresholdQ2}$ to the UE 410 through system information. $S_{SearchThresholdP}$ or $S_{SearchThresholdP2}$ is an RSRP-based configuration value, and $S_{SearchThresholdQ}$ or $S_{SearchThresholdQ2}$ is a reference signal receive quality (RSRQ)-based configuration value. The UE 410 evaluates whether a measured $S_{rxlev}$ value becomes lower than a reference signal receive power (RSRP)-based configuration value (e.g., $S_{SearchThresholdP}$ or $S_{SearchThresholdP2}$ 415). When the UE additionally receives an RSRQ-based configuration value, the UE may also evaluate whether a measured $S_{qual}$ value becomes lower than the RSRQ-based configuration value.

A Srxlev value or a Squal value refers to a value calculated using S-criteria based on Equation 1, Equation 2, and Table 2 below. The S-criteria consider a reception signal strength or a reception signal quality. That is, the Srxlev value and the Squal value may be defined as shown in Equations 1 and 2 below, and parameters of Equations 1 and 2 may be defined as shown in Table 2 below.

[Equation 1]

$$Srxlev = Q_{rxlevmeas} - (Q_{rxlevmin} + Q_{rxlevminoffset}) - P_{compensation} - Qoffset_{temp}$$

[Equation 2]

$$Squal = Q_{qualmeas} - (Q_{qualmin} + Q_{qualminoffset}) - Qoffset_{temp}$$

[Table 2]

| Srxlev | Cell selection RX level value (dB) |
|---|---|
| Squal | Cell selection quality value (dB) |
| $Qoffset_{temp}$ | Offset temporarily applied to a cell as specified in TS 38.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). If the UE supports SUL frequency for this cell, Qrxlevmin is obtained from *g-RxLevMinSUL,* if present, in *SIB1, SIB2* and *SIB4,* additionally, if $Q_{rxlevminoffsetcellSU}$L is present in *SIB3* and *SIB4* for the concerned cell, this cell specific offset is added to the corresponding Qrxlevmin to achieve the required minimum RX level in the concerned cell; else Qrxlevmin is obtained from *q-RxLevMin* in *SIB1, SIB2* and *SIB4,* additionally, if $Q_{rxlevminoffsetcell}$ is present in *SIB3* and *SIB4* for the concerned cell, this cell specific offset is added to the corresponding Qrxlevmin to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN. as specified in TS 23.122 [9]. |
| $Q_{qualminoffset}$ | Offset to the signalled $Q_{qualmin}$ taken into account in the Squal evaluation as a result of a periodic search for a higher priority PLMN while camped normally in a VPLMN. as specified in TS 23.122 [9]. |
| $P_{compensation}$ | If the UE supports the additionalPmax in the NR-NS-PmaxList, if present, in *SIB1, SIB2* and *SIB4:* $max(P_{EMAX1} - P_{PowerClass}, 0) - (min(P_{EMAX2}, P_{PowerClass}) - min(P_{EMAX1}, P_{PowerClass}))$ *(dB);* else: $max(P_{EMAX1} - P_{PowerClass}, 0)$ *(dB)* |
| $P_{EMAX1}, P_{EMAX2}$ | Maximum TX power level of a UE may use when transmitting on the uplink in the cell (dBm) defined as $P_{EMAX}$ in TS 38.101 [15]. If UE supports SUL frequency for this cell, $P_{EMAX1}$ and $P_{EMAX2}$ are obtained from the *p-Max* for SUL in *SIB1* and *NR-NS-PmaxList* for SUL respectively in *SIB1, SIB2* and *SIB4* as specified in TS 38.331 [3], else $P_{EMAX1}$ and $P_{EMAX2}$ are obtained from the *p-Max* and *NR-NS-PmaxList* respectively in *SIB1, SIB2* and *SIB4* for normal UL as specified in TS 38.331 [3]. |
| $P_{PowerClass}$ | Maximum RF output power of the UE (dBm) according to the UE power class as defined in TS 38.101-1 [15]. |

According to an embodiment of the disclosure, a Cell edge criterion may be used. If the $S_{rxlev}$ value measured by the UE 410 is greater than $S_{SearchThresholdP}$ 415, the UE 410 may consider that the UE 410 is not at a cell edge, and may temporarily suspend some operations among the intra-/inter-/inter-RAT cell measurement operations, or adjust requirements applied to the cell measurement operations to reduce power consumption. On the other hand, when the Srxlev value measured by the UE 410 is lower than or equal to $S_{SearchThresholdP}$ 415, the UE 410 may consider that the UE 410 is at the cell edge. For example, in FIG. 4, a Srxlev value has a value lower than or equal to $S_{SearchThresholdP}$ or $S_{SearchThresholdP2}$ 415 from time point T1 420, and the UE 410 may be considered to be at the cell edge from the time point T1 420. The UE 410 may perform a preconfigured cell measurement operation as originally configured, based on that the UE 410 is considered to be at the cell edge.

A method of not performing a measurement operation according to an embodiment of the disclosure (or a method of performing a relaxed measurement operation) is not limited to Relaxed measurement, and may also be applied to $S_{IntraSearchP}$, $S_{IntraSearchQ}$, $S_{nonIntraSearchP}$, $S_{nonIntraSearchQ}$, or s-Measure. Descriptions overlapping with those previously described, such as an operation of considering that the UE is not located at the cell edge and an operation of changing a cell measurement operation to reduce power consumption of the UE, are omitted.

The UE 410 according to an embodiment may perform a UE operation similar to the Relaxed measurement. The base station 405 may provide parameters such as $S_{IntraSearchP}$, $S_{IntraSearchQ}$, $S_{nonIntraSearchP}$, or $S_{nonIntraSearchQ}$ to the UE 410 through the system information. In the idle mode or the inactive mode, the UE 410 may not perform an intra-frequency measurement operation when the measured $S_{rxlev}$ value is greater than $S_{IntraSearchP}$ and the $S_{qual}$ value is greater than $S_{IntraSearchQ}$. In the idle mode or the inactive mode, when the measured $S_{rxlev}$ value is greater than $S_{nonIntraSearchP}$ and the $S_{qual}$ value is greater than $S_{nonIntraSearchQ}$, the UE 410 may not perform at least one of an inter-frequency measurement operation for a frequency having the same priority as a current serving frequency, an inter-frequency measurement operation for a frequency having a lower priority than the current serving frequency, or an inter-RAT frequency measurement operation for a frequency having a lower priority than the current serving frequency.

When the UE 410 is in the connected mode, the base station may provide an s-MeasureConfig IE to the UE 410. The provided s-MeasureConfig IE includes an SSB-RSRP configuration value or a CSI-RSRP configuration value. The UE 410 may measure an SSB or CSI-RS transmitted from an SpCell and derive an RSRP. The UE 410 may not perform a cell measurement operation when the derived RSRP value is greater than an SSB-RSRP configuration value or a CSI-RSRP configuration value included in the s-MeasureConfig IE.

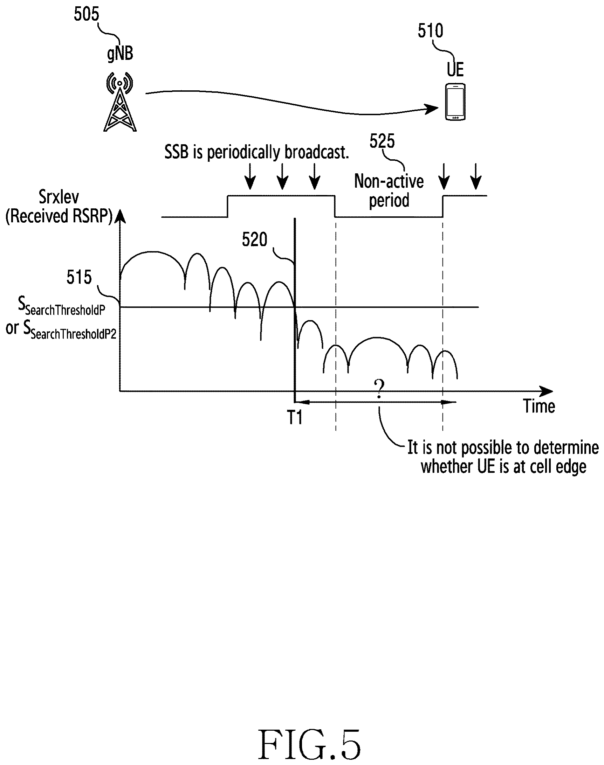

FIG. 5 illustrates the influence of a Non-active period of Cell DTX when determining whether a UE is at a cell edge according to an embodiment of the disclosure.

A base station 505 may provide Cell DTX pattern information or Relaxed measurement configuration information to a UE 510 through system information or dedicated signaling. According to Cell DTX, a Non-active period 525 periodically arrives, and the base station 505 does not transmit an SSB (or CSI-RS) during the Non-active period.

When a measured $S_{rxlev}$ value is lower than or equal to $S_{SearchThresholdP}$ 515, the UE 510 may consider that the UE 510 is at a cell edge. For example, in FIG. 5, since a $S_{rxlev}$ value has a value lower than or equal to $S_{SearchThresholdP}$ 515 from time point T1 520, the UE 510 may be considered to be at the cell edge from the time point T1 520. However, during the Non-active period 525, the UE 510 is not able to measure an SSB, and thus is not able to derive the $S_{rxlev}$ value. Therefore, during the Non-active period 525, it is not possible to compare the $S_{rxlev}$ value with $S_{SearchThresholdP}$ or $S_{SearchThresholdP2}$ 515, and it is not possible to determine whether the UE 510 is at the cell edge. For example, during the Non-active period 525, the $S_{rxlev}$ value may increase again and become greater than $S_{SearchThresholdP}$. This problem is not limited to $S_{SearchThresholdP}$ or $S_{SearchThresholdP2}$, but also occurs in relation to $S_{IntraSearchP}$, $S_{IntraSearchQ}$, $S_{nonIntraSearchP}$, $S_{nonIntraSearchQ}$, and s-Measure.

A method according to an embodiment of the disclosure may provide a result of comparing a measurement value (e.g., a $S_{rxlev}$ value or a $S_{qual}$ value) with a preconfigured threshold value (e.g., $S_{SearchThresholdP}$, $S_{SearchThresholdP2}$, $S_{IntrasearchP}$, $S_{IntrasearchQ}$, $S_{nonIntraSearchP}$, $S_{nonIntraSearchQ}$, or s-Measure) during a Non-active period of Cell DTX. For example, a method according to an embodiment may provide a result of determining that a measurement value exceeds a threshold value during a Non-active period of Cell DTX.

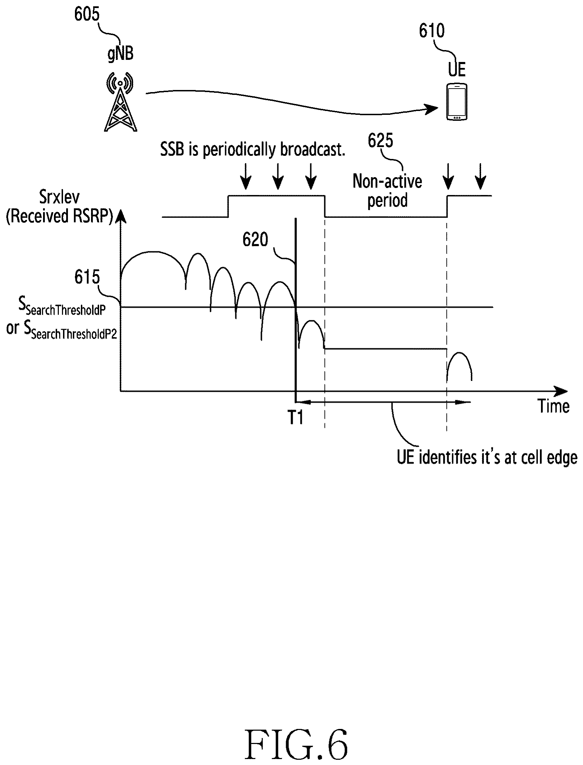

FIG. 6 illustrates a first solution for determining whether a UE is at a cell edge during a Non-active period of Cell DTX according to an embodiment of the disclosure.

The first solution is characterized by applying a latest Srxlev (or Squal) value derived in the previous Active period to a Cell edge criterion during a Non-active period 625 of Cell DTX.

A base station 605 may provide Cell DTX pattern information or Relaxed measurement configuration information to a UE 610 through system information or dedicated signaling. According to Cell DTX, the Non-active period 625 periodically arrives, and the base station 605 does not transmit an SSB (or CSI-RS) during the Non-active period 625. When a measured $S_{rxlev}$ value is lower than or equal to $S_{SearchThresholdP}$ 615, the UE 610 may consider that the UE 610 is at a cell edge. For example, in FIG. 6, a $S_{rxlev}$ value has a value lower than or equal to $S_{SearchThresholdP}$ or $S_{SearchThresholdP2}$ 615 from time point T1 620, and the UE 610 may be considered to be located at the cell edge from the time point T1 620.

During the Non-active period 625, the UE 610 may not be able to measure an SSB. The UE 610 according to an embodiment of the disclosure may use the latest $S_{rxlev}$ value derived in the previous Active period prior to the Non-active period 625 in relation to the Non-active period 625. For example, in FIG. 6, the UE 610 may consider that the UE 610 is located at the cell edge during the Non-active period 625, based on the latest $S_{rxlev}$ value derived in the active period prior to the Non-active period 625. Unlike in FIG. 6, when the latest $S_{rxlev}$ value derived in the previous Active period is greater than $S_{SearchThresholdP}$ 615, the UE 610 may consider that the UE 610 is not at the cell edge during the non-active period.

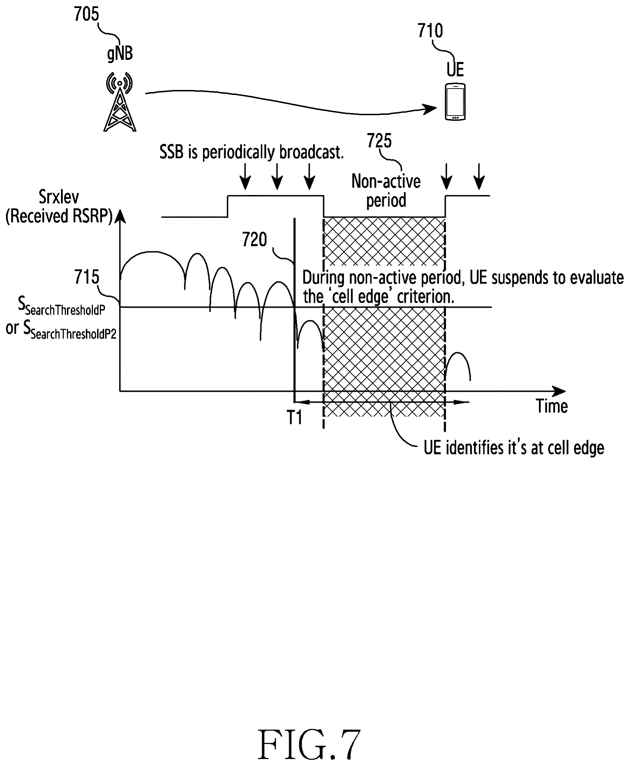

FIG. 7 illustrates a second solution for determining whether a UE is at a cell edge during a Non-active period of Cell DTX according to an embodiment of the disclosure.

The second solution is characterized by temporarily suspending an evaluation operation according to a Cell edge criterion during a Non-active period of Cell DTX, and applying a state applied in the previous Active period.

A base station 705 provides Cell DTX pattern information or Relaxed measurement configuration information to a UE 710 through system information or dedicated signaling. According to Cell DTX, a Non-active period 725 periodically arrives, and the base station 705 does not transmit an SSB (or CSI-RS) during the Non-active period. When a measured $S_{rxlev}$ value is lower than or equal to $S_{SearchThresholdP}$ 715, the UE 710 considers that the UE 710 is at a cell edge. For example, in FIG. 7, a Srxlev value has a value lower than or equal to $S_{SearchThresholdP}$ 715 from time point T1 720, and the UE 710 may be considered to be located at the cell edge from the time point T1 720. In this case, if the UE 710 is not able to measure an SSB during the Non-active period 625, the state in which the UE 710 was considered to be at the cell edge in the previous Active period may be applied during the Non-active period. Therefore, the UE 710 may consider that the UE 710 is at the cell edge even during the Non-active period. Unlike in FIG. 7, when the UE 710 was considered not to be at the cell edge in the previous Active period, the UE 710 may consider itself not to be at the cell edge even during the Non-active period.

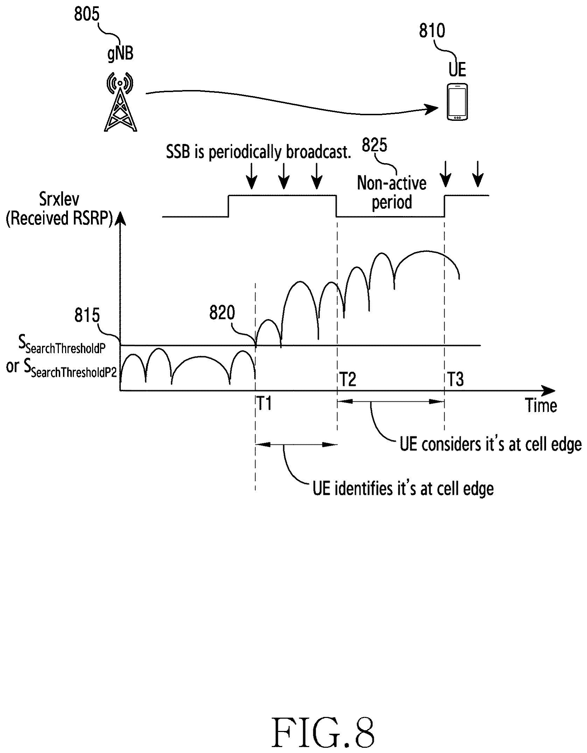

FIG. 8 illustrates a third solution for determining whether a UE is at a cell edge during a Non-active period of Cell DTX according to an embodiment of the disclosure.

The third solution is characterized by assuming that a Cell edge criterion is not satisfied during a Non-active period 825 of Cell DTX. Solutions related to Relaxed measurement, $S_{IntraSearchP}$, $S_{IntraSearchQ}$, $S_{nonIntraSearchP}$, $S_{nonIntraSearchQ}$, or s-Measure are all optimization solutions, and even when the solutions are not configured, there is no problem with a network providing a service to a UE. Therefore, the optimization solutions may be temporarily suspended during the Non-active period.

A base station 805 may provide Cell DTX pattern information or Relaxed measurement configuration information to a UE 810 through system information or dedicated signaling. According to Cell DTX, the non-active period 825 periodically arrives, and the base station 805 does not transmit an SSB (or CSI-RS) during the Non-active period 825. When a measured $S_{rxlev}$ value is greater than $S_{SearchThresholdP}$ 815, the UE 810 may consider that the UE 810 is not at a cell edge. For example, in FIG. 8, a $S_{rxlev}$ value has a value exceeding $S_{SearchThresholdP}$ or $S_{SearchThresholdP2}$ 815 from time point T1 820, and the UE 810 may be considered to be located at the cell edge from the time point T1 820.

The UE 810 considers that the UE 810 is at the cell edge from time point T2, when the Non-active period 825 in which an SSB cannot be measured arrives, until time point T3 when the Non-active period 825 ends. Therefore, during the Non-active period, the UE 810 may perform a predetermined optimization operation (e.g., Relaxed measurement, $S_{IntraSearchP}$, $S_{IntraSearchQ}$, $S_{nonIntraSearchP}$, $S_{nonIntraSearchQ}$, or s-Measure-related solution) related to cell measurement to save power consumption.

The solutions proposed in the embodiments of the disclosure may be configured for a UE (e.g., the UE 610 of FIG. 6, the UE 710 of FIG. 7, or the UE 810 of FIG. 8) depending on selection of a base station (e.g., the base station 605 of FIG. 6, the base station 705 of FIG. 7, or the base station 805 of FIG. 8). The base station may configure a solution for the UE through system information or predetermined dedicated signaling (e.g., RRCRelease message). The base station may configure multiple solutions for the UE. When a predetermined condition is satisfied, the UE may selectively apply a solution corresponding to the satisfied condition from among the multiple solutions selected by the base station. For example, the predetermined condition may include at least one of the following conditions.

- When the length of the Non-active period of the Cell DTX is shorter than a preconfigured threshold value, the UE applies the first solution (or the second solution) during the Non-active period. Otherwise, the UE applies the third solution. The threshold value may be configured by the base station or may be predefined.
- When a Cell edge criterion is satisfied during the previous Active period, the UE applies the first solution (or the second solution) during the Non-active period. Otherwise, the UE applies the third solution.
- When the length of the Non-active period of the Cell DTX is shorter than a preconfigured threshold value and a Cell edge criterion is satisfied during the previous Active period, the UE applies the first solution (or the second solution) during the Non-active period. Otherwise, the UE applies the third solution.

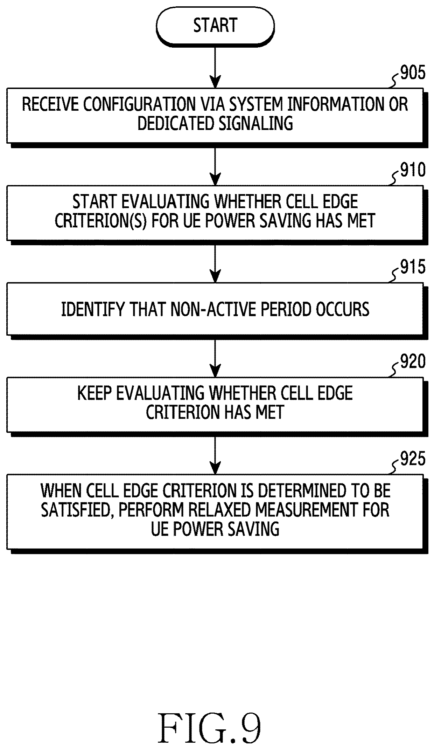

FIG. 9 is a flowchart of a UE operation for determining whether a UE is at a cell edge during a Non-active period of Cell DTX according to an embodiment of the disclosure.

In step 905, a UE receives dedicated signaling or system information including predetermined configuration information from a base station. The predetermined configuration information includes Cell DTX pattern information, Relaxed measurement configuration information, $S_{IntraSearchP}$, $S_{IntrasearchQ}$, $S_{nonIntraSearchP}$, $S_{nonIntraSearchQ}$, or s-MeasureConfig. However, the predetermined configuration information is not limited to the above example, and may further include configuration information required to perform the solution proposed in the embodiment of the disclosure.

In step 910, the UE evaluates whether a Cell edge criterion is satisfied in order to reduce power consumption. When a predetermined equation is satisfied, the UE may temporarily suspend some operations among intra-/inter-/inter-RAT cell measurement operations or change requirements applied to the operations in order to reduce power consumption. The UE may apply Srxlev and Squal to determine whether the equation is satisfied.

In step 915, the UE may recognize that a Non-active period has arrived. In the Non-active period, the base station does not transmit an SSB or a CSI-RS. Therefore, during the Non-active period, the UE is not able to derive Srxlev or Squal based on a measurement result.

In step 920, the UE evaluates whether the Cell edge criterion is satisfied according to an embodiment of the disclosure.

In step 925, based on a result of the evaluation, the UE may temporarily suspend some operations among the intra-/inter-/inter-RAT cell measurement operations or change requirements applied to the operations in order to reduce power consumption.

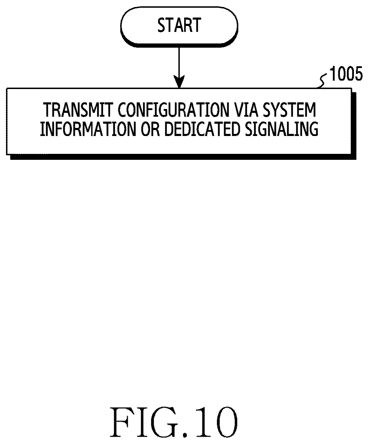

FIG. 10 is a flowchart of a base station operation for determining whether a UE is at a cell edge during a Non-active period of Cell DTX according to an embodiment of the disclosure.

In step 1005, a base station may transmit dedicated signaling or system information including configuration information to a UE. The configuration information includes Cell DTX pattern information, Relaxed measurement configuration information, $S_{IntraSearchP}$, $S_{IntraSearchQ}$, $S_{nonIntraSearchP}$, $S_{nonIntraSearchQ}$, or s-MeasureConfig. However, the configuration information is not limited thereto, and may further include configuration information required to perform the solutions proposed in the embodiments of the disclosure.

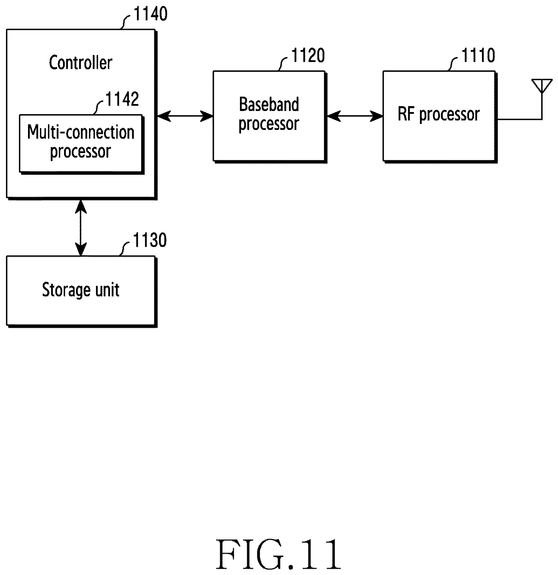

FIG. 11 illustrates a structure of a UE according to an embodiment of the disclosure.

Referring to FIG. 11, the UE may include a radio frequency (RF) processor 1110, a baseband processor 1120, a storage unit 1130, and a controller 1140.

The RF processor 1110 may perform a function for transmitting and receiving a signal via a wireless channel, such as band conversion and amplification of the signal. That is, the RF processor 1110 may up-convert a baseband signal provided from the baseband processor 1120 to an RF band signal, may transmit the same through an antenna, and may down-convert an RF band signal received through the antenna to a baseband signal. For example, the RF processor 1110 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1110 may include multiple RF chains. Furthermore, the RF processor 1110 may perform beamforming. For the beamforming, the RF processor 1110 may adjust the phase and magnitude of each of signals transmitted and received through multiple antennas or antenna elements. In addition, the RF processor may perform MIMO, and may receive multiple layers when performing a MIMO operation.

The baseband processor 1120 may perform functions of conversion between baseband signals and bitstrings according to the system's physical layer specifications. For example, in case of data transmission, the baseband processor 1120 may encode and modulate a transmitted bitstring to generate complex symbols. In addition, in case of data reception, the baseband processor 1120 may restore the received bit stream through demodulation and decoding of the baseband signal provided from the RF processor 1110. For example, when following the orthogonal frequency division multiplexing (OFDM) scheme, during data transmission, the baseband processor 1120 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, in case of data reception, the baseband processor 1120 may split a baseband signal provided from the RF processor 1110 at the OFDM symbol level, may restore signals mapped to subcarriers through a fast Fourier transform (FFT) operation, and may restore a received bitstring through demodulation and decoding.

The baseband processor 1120 and the RF processor 1110 may transmit and receive signals as described above. Therefore, the baseband processor 1120 and the RF processor 1110 may be referred to as a transmitter, a receiver, a transceiver, or a communication unit. Furthermore, at least one of the baseband processor 1120 and the RF processor 1110 may include multiple communication modules to support multiple different radio access technologies. In addition, at least one of the baseband processor 1120 and the RF processor 1110 may include different communication modules to process signals in different frequency bands. For example, the different radio access technologies may include wireless LANs (for e.g., IEEE 802.11), cellular networks (e.g., LTE), and the like. In addition, the different frequency bands may include super high frequency (SHF) (e.g., 2NRHz) bands and millimeter wave (mmWave) (e.g., 60GHz) bands.

The storage unit 1130 may store basic programs, application programs, and data, such as configuration information, for operation of the main base station. In particular, the storage 1130 may store information related to the second access node, which performs wireless communication using the second wireless access technology. In addition, the storage unit 1130 provides the stored data at the request of the controller 1140.

The controller 1140 controls the overall operation of the UE. For example, the controller 1140 may transmit/receive signals through the baseband processor 1120 and the RF processor 1110. In addition, the controller 1140 records

data in the storage unit 1130 and reads the data from the storage unit 1130. To this end, the controller 1140 may include at least one processor. For example, the controller 1140 may include a communication processor (CP) configured to perform control for communication, and an application processor (AP) configured to control upper layers such as application programs. The controller 1140 may further include a multi-connection processor 1142 to support multiple connections.

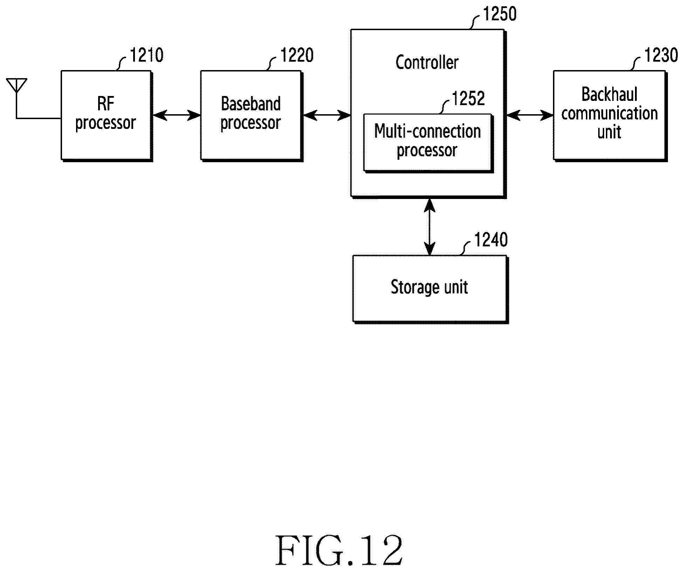

FIG. 12 illustrates a structure of a base station according to an embodiment of the disclosure.

As illustrated in the drawing, the base station may include an RF processor 1210, a baseband processor 1220, a backhaul communication unit 1230, a storage unit 1240, and a controller 1250.

The RF processor 1210 may perform a function for transmitting and receiving a signal via a wireless channel, such as band conversion and amplification of the signal. That is, the RF processor 1210 may up-convert a baseband signal provided from the baseband processor 1220 to an RF band signal, may transmit the same through an antenna, and may down-convert an RF band signal received through the antenna to a baseband signal. For example, the RF processor 1210 may include a transmission filter, a reception filter, an amplifier, a mixer, an oscillator, a DAC, and an ADC. Although only one antenna is illustrated in the drawing, the first access node may include multiple antennas. In addition, the RF processor 1210 may include multiple RF chains. Furthermore, the RF processor 1210 may perform beamforming. For the beamforming, the RF processor 1210 may adjust the phase and magnitude of each of signals transmitted and received through multiple antennas or antenna elements. The RF processor may transmit one or more layers to perform a downward MIMO operation.

The baseband processor 1220 may perform functions of conversion between baseband signals and bitstrings according to the physical layer specifications of a first radio access technology. For example, in case of data transmission, the baseband processor 1220 may encode and modulate a transmitted bitstring to generate complex symbols. In addition, in case of data reception, the baseband processor 1220 may restore the received bit stream through demodulation and decoding of the baseband signal provided from the RF processor 1210. For example, when following the OFDM scheme, during data transmission, the baseband processor 1220 may encode and modulate a transmitted bitstring to generate complex symbols, may map the complex symbols to subcarriers, and may configure OFDM symbols through IFFT operation and CP insertion. In addition, in case of data reception, the baseband processor 1220 may split a baseband signal provided from the RF processor 1210 at the OFDM symbol level, may restore signals mapped to subcarriers through FFT operation, and may restore a received bitstring through demodulation and decoding. The baseband processor 1220 and the RF processor 1210 may transmit and receive signals as described above. Therefore, the baseband processor 1220 and the RF processor 1210 may be referred to as a transmitter, a receiver, a transceiver, a communication unit, or a wireless communication unit.

The backhaul communication unit 1230 provides an interface for performing communication with other nodes in the network. That is, the backhaul communication unit 1230 may convert bitstrings transmitted from the main base station to other nodes (for example, auxiliary base station, core network) to physical signals, and may convert physical signals received from the other nodes to bitstrings.

The storage unit 1240 may store basic programs, application programs, and data, such as configuration information, for operation of the main base station. In particular, the storage unit 1240 may store information on bearers allocated to the connected UE, measurement results reported from the connected UE, and the like. In addition, the storage unit 1240 may store information serving as a criterion for determining whether to provide or stop multiple connections to the UE. In addition, the storage unit 1240 provides the stored data at the request of the controller 1250.

The controller 1250 controls the overall operation of the base station. For example, the controller 1250 may transmit/receive signals through the baseband processor 1220 and the RF processor 1210 or through the backhaul communication unit 1230. In addition, the controller1250 records data in the storage unit 1240 and reads the data from the storage unit 1240. To this end, the controller 1250 may include at least one processor. The controller 1250 may further include a multi-connection processor 1252 to support multiple connections.

A terminal in a wireless communication system according to an embodiment may include: a transceiver; and a controller coupled with the transceiver, wherein the controller is configured to perform control to: receive cell discontinuous transmission (DTX) pattern information and a reception signal configuration value from a base station through system information or dedicated signaling; identify a synchronization signal (SS)/physical broadcast channel (PBCH) block (SSB) non-transmission interval in which an SSB is not transmitted, based on the cell DTX pattern information or an SSB broadcast period; determine whether the terminal is located at a cell edge of the base station in the SSB non-transmission interval, based on a latest received SSB; and determine a cell measurement period in the SSB non-transmission interval, based on the determination.

The controller may be configured to perform control to: determine a reception signal measurement value, based on the latest received SSB; compare the reception signal measurement value with the reception signal configuration value; and when the reception signal measurement value is lower than or equal to the reception signal configuration value, determine that the terminal is located at the cell edge in the SSB non-transmission interval.

The controller may be configured to perform control to: determine a reception signal measurement value, based on the latest received SSB; determine whether the terminal is located at the cell edge at a time point of reception of the latest received SSB, based on a comparison result between the reception signal measurement value and the reception signal configuration value; and when the terminal is determined to be located at the cell edge at the time point of reception of the latest received SSB, determine that the terminal is located at the cell edge in the SSB non-transmission interval.

The controller may be configured to perform control to determine that the terminal is located at the cell edge in the SSB non-transmission interval.

The controller may be controlled to determine a reception signal measurement value, based on the latest received SSB, wherein the reception signal measurement value includes at least one of a cell selection rx level value (Srxlev), a cell selection quality value (Squal), a reference signal receive power (RSRP), or a reference signal receive quality (RSRQ), and the reception signal configuration value includes at least one of $S_{SearchThresholdP}$, $S_{SearchThresholdP2}$, $S_{SearchThresholdQ}$, $S_{SearchThresholdQ2}$, $S_{IntraSearchP}$, $S_{IntraSearchQ}$, $S_{nonIntraSearchP}$, $S_{nonIntraSearchQ}$, or an SSB-RSRP configuration value.

The controller may be configured to perform control to: when the terminal is determined to be not located at the cell edge, perform cell measurement, based on a first measurement period, in the SSB non-transmission interval; and when the terminal is determined to be located at the cell edge, perform the cell measurement, based on a second measurement period longer than the first measurement period, in the SSB non-transmission interval.

The controller may be configured to perform control to: when a length of the SSB non-transmission interval is less than a threshold value configured for the terminal, determine a reception signal measurement value, based on the latest received SSB; and determine whether the terminal is located at the cell edge of the base station in the SSB non-transmission interval, based on a comparison result between the reception signal measurement value and the reception signal configuration value.

The controller may be configured to perform control to, when a length of the SSB non-transmission interval is greater than or equal to a threshold value configured for the terminal, determine that the terminal is located at the cell edge in the SSB non-transmission interval.

A method performed by a terminal in a wireless communication system according to an embodiment may include: receiving cell discontinuous transmission (DTX) pattern information and a reception signal configuration value from a base station through system information or dedicated signaling; identifying a synchronization signal (SS)/physical broadcast channel (PBCH) block (SSB) non-transmission interval in which an SSB is not transmitted, based on the cell DTX pattern information or an SSB broadcast period; determining whether the terminal is located at a cell edge of the base station in the SSB non-transmission interval, based on a latest received SSB; and determining a cell measurement period in the SSB non-transmission interval, based on the determination.

The method performed by the terminal may further include: determining a reception signal measurement value, based on the latest received SSB; comparing the reception signal measurement value with the reception signal configuration value; and when the reception signal measurement value is lower than or equal to the reception signal configuration value, determining that the terminal is located at the cell edge in the SSB non-transmission interval.

The method performed by the terminal may further include: determining a reception signal measurement value, based on the latest received SSB; determining whether the terminal is located at the cell edge at a time point of reception of the latest received SSB, based on a comparison result between the reception signal measurement value and the reception signal configuration value; and when the terminal is determined to be located at the cell edge at the time point of reception of the latest received SSB, determining that the terminal is located at the cell edge in the SSB non-transmission interval.

The method performed by the terminal may further include determining that the terminal is located at the cell edge in the SSB non-transmission interval.

The method performed by the terminal may further include determining a reception signal measurement value, based on the latest received SSB, wherein the reception signal measurement value includes at least one of a cell selection rx level value (Srxlev), a cell selection quality value (Squal), a reference signal receive power (RSRP), or a reference signal receive quality (RSRQ), and the reception signal configuration value includes at least one of $S_{SearchThresholdP}$, $S_{SearchThresholdP2}$, $S_{SearchThresholdQ}$, $S_{SearchThresholdQ2}$, $S_{IntraSearchP}$, $S_{IntraSearchQ}$, $S_{nonIntraSearchP}$, $S_{nonIntraSearchQ}$, or an SSB-RSRP configuration value.

The method performed by the terminal may further include: when a length of the SSB non-transmission interval is less than a threshold value configured for the terminal, determining a reception signal measurement value, based on the latest received SSB; and determining whether the terminal is located at the cell edge of the base station in the SSB non-transmission interval, based on a comparison result between the reception signal measurement value and the reception signal configuration value.

The method performed by the terminal may further include, when a length of the SSB non-transmission interval is greater than or equal to a threshold value configured for the terminal, determining that the terminal is located at the cell edge in the SSB non-transmission interval.

**Claims**

1.

A terminal in a wireless communication system, the terminal comprising:

a transceiver; and
a controller coupled with the transceiver,
wherein the controller is configured to perform control to:

receive, from a base station via system information or dedicated signaling, cell discontinuous transmission (DTX) pattern information and a reception signal configuration value;
based on the cell DTX pattern information or a synchronization signal (SS)/physical broadcast channel (PBCH) block (SSB) broadcast period, identify an SSB non-transmission interval in which an SSB is not transmitted;
based on a latest received SSB, determine whether the terminal is located at a cell edge of the base station in the SSB non-transmission interval; and
based on the determination, determine a cell measurement period in the SSB non-transmission interval.

2. The terminal of claim 1, wherein the controller is configured to perform control to:

determine a reception signal measurement value, based on the latest received SSB;
compare the reception signal measurement value with the reception signal configuration value; and
in case that the reception signal measurement value is less than or equal to the reception signal configuration value, determine that the terminal is located at the cell edge in the SSB non-transmission interval.

3. The terminal of claim 1, wherein the controller is configured to perform control to:

determine a reception signal measurement value, based on the latest received SSB;
based on a comparison result between the reception signal measurement value and the reception signal configuration value, determine whether the terminal is located at the cell edge at a reception timepoint of the latest received SSB; and
in case that the terminal is determined to be located at the cell edge at the reception timepoint of the latest received SSB, determine that the terminal is located at the cell edge in the SSB non-transmission interval.

4. The terminal of claim 1, wherein the controller is configured to perform control to determine that the terminal is located at the cell edge in the SSB non-transmission interval.

5.

The terminal of claim 1, wherein the controller is configured to perform control to determine a reception signal measurement value, based on the latest received SSB,
wherein the reception signal measurement value includes at least one of a cell selection rx level value (Srxlev), a cell selection quality value (Squal), a reference signal receive power (RSRP), or a reference signal receive quality (RSRQ), and
wherein the reception signal configuration value includes at least one of $S_{SearchThresholdP}$, $S_{SearchThresholdP2}$, $S_{SearchThresholdQ}$, $S_{SearchThresholdQ2}$, $S_{IntraSearchP}$, $S_{IntraSearchQ}$, $S_{nonIntraSearchP}$, $S_{nonIntraSearchQ}$, or an SSB-RSRP configuration value.

6. The terminal of claim 1, wherein the controller is configured to perform control to:

in case that the terminal is determined to be not located at the cell edge, perform cell measurement, based on a first measurement period, in the SSB non-transmission interval; and
in case that the terminal is determined to be located at the cell edge, perform the cell measurement, based on a second measurement period longer than the first measurement period, in the SSB non-transmission interval.

7. The terminal of claim 1, wherein the controller is configured to perform control to:

in case that a length of the SSB non-transmission interval is less than a threshold value configured for the terminal, determine a reception signal measurement value, based on the latest received SSB; and
based on a comparison result between the reception signal measurement value and the reception signal configuration value, determine whether the terminal is located at the cell edge of the base station in the SSB non-transmission interval.

8. The terminal of claim 1, wherein the controller is configured to perform control to, in case that a length of the SSB non-transmission interval is greater than or equal to a threshold value configured for the terminal, determine that the terminal is located at the cell edge in the SSB non-transmission interval.

9. A method performed by a terminal in a wireless communication system, the method comprising:

Receiving, from a base station via system information or dedicated signaling, cell discontinuous transmission (DTX) pattern information and a reception signal configuration value;
based on the cell DTX pattern information or a synchronization signal (SS)/physical broadcast channel (PBCH) block (SSB) broadcast period, identifying an SSB non-transmission interval in which an SSB is not transmitted;
based on a latest received SSB, determining whether the terminal is located at a cell edge of the base station in the SSB non-transmission interval; and
based on the determination, determining a cell measurement period in the SSB non-transmission interval.

10. The method of claim 9, further comprising:

determining a reception signal measurement value, based on the latest received SSB;
comparing the reception signal measurement value with the reception signal configuration value; and
in case that the reception signal measurement value is less than or equal to the reception signal configuration value, determining that the terminal is located at the cell edge in the SSB non-transmission interval.

11. The method of claim 9, further comprising:

determining a reception signal measurement value, based on the latest received SSB;
based on a comparison result between the reception signal measurement value and the reception signal configuration value, determining whether the terminal is located at the cell edge at a reception timepoint of the latest received SSB; and
in case that the terminal is determined to be located at the cell edge at the reception timepoint of the latest received SSB, determining that the terminal is located at the cell edge in the SSB non-transmission interval.

12. The method of claim 9, further comprising determining that the terminal is located at the cell edge in the SSB non-transmission interval.

13.

The method of claim 9, further comprising determining a reception signal measurement value, based on the latest received SSB,
wherein the reception signal measurement value includes at least one of a cell selection rx level value (Srxlev), a cell selection quality value (Squal), a reference signal receive power (RSRP), or a reference signal receive quality (RSRQ), and
wherein the reception signal configuration value includes at least one of $S_{SearchThresholdP}$, $S_{SearchThresholdP2}$, $S_{SearchThresholdQ}$, $S_{SearchThresholdQ2}$, $S_{IntraSearchP}$, $S_{IntrasearchQ}$, $S_{nonIntraSearchP}$, $S_{nonIntraSearchQ}$, or an SSB-RSRP configuration value.

14. The method of claim 9, further comprising:

in case that a length of the SSB non-transmission interval is less than a threshold value configured for the terminal, determining a reception signal measurement value, based on the latest received SSB; and
based on a comparison result between the reception signal measurement value and the reception signal configuration value, determining whether the terminal is located at the cell edge of the base station in the SSB non-transmission interval.

15. The method of claim 9, further comprising, in case that a length of the SSB non-transmission interval is greater than or equal to a threshold value configured for the terminal, determining that the terminal is located at the cell edge in the SSB non-transmission interval.

FIG.1

FIG.2

FIG.3

FIG.4

505
gNB

510
UE

SSB is periodically broadcast.
525
Non-active
period

Srxlev
(Received RSRP)

520

515

$S_{SearchThresholdP}$
or $S_{SearchThresholdP2}$

Time

T1

?

It is not possible to determine
whether UE is at cell edge

FIG.5

FIG.6

FIG.7

FIG.8

```
                    ┌─────────────┐
                    │    START    │
                    └─────────────┘
                           │
                           ▼                              ┌905
    ┌──────────────────────────────────────────────────┐
    │ RECEIVE CONFIGURATION VIA SYSTEM INFORMATION OR   │
    │               DEDICATED SIGNALING                 │
    └──────────────────────────────────────────────────┘
                           │
                           ▼                              ┌910
    ┌──────────────────────────────────────────────────┐
    │ START EVALUATING WHETHER CELL EDGE               │
    │ CRITERION(S) FOR UE POWER SAVING HAS MET         │
    └──────────────────────────────────────────────────┘
                           │
                           ▼                              ┌915
    ┌──────────────────────────────────────────────────┐
    │      IDENTIFY THAT NON-ACTIVE PERIOD OCCURS       │
    └──────────────────────────────────────────────────┘
                           │
                           ▼                              ┌920
    ┌──────────────────────────────────────────────────┐
    │ KEEP EVALUATING WHETHER CELL EDGE                 │
    │            CRITERION HAS MET                       │
    └──────────────────────────────────────────────────┘
                           │
                           ▼                              ┌925
    ┌──────────────────────────────────────────────────┐
    │ WHEN CELL EDGE CRITERION IS DETERMINED TO BE      │
    │ SATISFIED, PERFORM RELAXED MEASUREMENT FOR        │
    │               UE POWER SAVING                     │
    └──────────────────────────────────────────────────┘
```

# FIG.9

```
        ┌─────────────┐
        │    START    │
        └──────┬──────┘
               │            ⌇1005
               ▼
┌────────────────────────────────────┐
│  TRANSMIT CONFIGURATION VIA SYSTEM  │
│  INFORMATION OR DEDICATED SIGNALING │
└────────────────────────────────────┘
```

# FIG.10

1140

Controller

1142

Multi-connection
processor

1120

Baseband
processor

1110

RF processor

1130

Storage unit

FIG.11

FIG.12

## INTERNATIONAL SEARCH REPORT

| International application No. |
|---|
| **PCT/KR2024/095104** |

| **A.** | **CLASSIFICATION OF SUBJECT MATTER** |
|---|---|

**H04W 24/08**(2009.01)i; **H04W 64/00**(2009.01)i; **H04W 52/02**(2009.01)i; **H04W 36/00**(2009.01)i; **H04W 76/28**(2018.01)i; **H04B 17/318**(2015.01)i

According to International Patent Classification (IPC) or to both national classification and IPC

| **B.** | **FIELDS SEARCHED** |
|---|---|

Minimum documentation searched (classification system followed by classification symbols)

H04W 24/08(2009.01); H04W 52/02(2009.01); H04W 76/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DTX, SSB, 셀 경계(cell edge), 측정(measurement)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | MODERATOR (INTEL CORPORATION). Discussion Summary #5 for energy saving techniques of NW energy saving SI. R1-2210744, 3GPP TSG RAN WG1 Meeting #110bis-e. 24 October 2022.<br>See section 2.2. | 1-15 |
| A | QUALCOMM INCORPORATED. Network energy saving techniques. R1-2212129, 3GPP TSG RAN WG1 Meeting #111. 07 November 2022.<br>See section 2.4. | 1-15 |
| A | INTEL CORPORATION. Discussion on Network Energy Saving Techniques. R1-2211411, 3GPP TSG RAN WG1 Meeting #111. 07 November 2022.<br>See section 2.3.3. | 1-15 |
| A | HUAWEI et al. Miscellaneous corrections on TS 38.331 for SL enhancements. R2-2208869, 3GPP TSG RAN WG2 Meeting #119-e. 03 September 2022.<br>See section 6.3.1. | 1-15 |
| A | EP 2595435 B1 (NEC CORPORATION) 03 September 2014 (2014-09-03)<br>See paragraphs [0006]-[0022]; and claims 1-23. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 May 2024** | **28 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095104**

| Patent document cited in search report | | | Publication date (day/month/year) | Patent family member(s) | | | Publication date (day/month/year) |
|---|---|---|---|---|---|---|---|
| EP | 2595435 | B1 | 03 September 2014 | CN | 101766044 | A | 30 June 2010 |
| | | | | CN | 101766044 | B | 25 December 2013 |
| | | | | CN | 102938941 | A | 20 February 2013 |
| | | | | CN | 102938941 | B | 02 September 2015 |
| | | | | EP | 2172076 | A1 | 07 April 2010 |
| | | | | EP | 2172076 | B1 | 03 September 2014 |
| | | | | EP | 2595435 | A1 | 22 May 2013 |
| | | | | GB | 2452022 | A | 25 February 2009 |
| | | | | GB | 2452022 | B | 28 March 2012 |
| | | | | JP | 2010-534418 | A | 04 November 2010 |
| | | | | JP | 2012-191663 | A | 04 October 2012 |
| | | | | JP | 5141929 | B2 | 13 February 2013 |
| | | | | JP | 5392518 | B2 | 22 January 2014 |
| | | | | KR | 10-1169187 | B1 | 26 July 2012 |
| | | | | KR | 10-1206143 | B1 | 29 November 2012 |
| | | | | KR | 10-2010-0050518 | A | 13 May 2010 |
| | | | | KR | 10-2011-0102960 | A | 19 September 2011 |
| | | | | US | 2010-0130214 | A1 | 27 May 2010 |
| | | | | US | 2012-0270557 | A1 | 25 October 2012 |
| | | | | US | 8423036 | B2 | 16 April 2013 |
| | | | | US | 8583131 | B2 | 12 November 2013 |
| | | | | WO | 2009-014248 | A1 | 29 January 2009 |

Form PCT/ISA/210 (patent family annex) (July 2022)